Europäisches Patentamt

European Patent Office

Office européen des brevets

(11) Veröffentlichungsnummer: **0 445 511 A1**

## EUROPÄISCHE PATENTANMELDUNG

(21) Anmeldenummer: 91100807.6

(51) Int. Cl.⁵: **G06F 12/04**

(22) Anmeldetag: 23.01.91

(30) Priorität: 03.02.90 DE 4003191

(43) Veröffentlichungstag der Anmeldung:
11.09.91 Patentblatt 91/37

(84) Benannte Vertragsstaaten:
AT BE CH DE DK ES FR GB GR IT LI LU NL SE

(71) Anmelder: Standard Elektrik Lorenz
Aktiengesellschaft
Lorenzstrasse 10
W-7000 Stuttgart 40(DE)
(84) DE

(71) Anmelder: Alcatel N.V.
Strawinskylaan 537
NL-1077 XX Amsterdam(NL)
(84) BE CH DK ES FR GB GR IT LI LU NL SE AT

(72) Erfinder: Cheung, Raymond
Bergstrasse 23
W-7015 Korntal(DE)

(74) Vertreter: Pohl, Heribert, Dipl.-Ing et al
Standard Elektrik Lorenz AG Patent- und
Lizenzwesen Postfach 30 09 29
W-7000 Stuttgart 30(DE)

(54) Verfahren zur Laufzeitoptimierung von Umspeicher- und Auffüllvorgängen im Speicher einer elektronischen Datenverarbeitungsanlage.

(57) Wortweises Umspeichern oder Auffüllen in Speicherbereichen mit ungerader Anfangsadresse erfordert für jedes Wort den Zugriff auf zwei Adressen und ist daher zeitaufwendig. Beim erfindungsgemäßen Verfahren werden jeweils zwei zu verschiedenen Worten gehörende Bytes zu einem Wort zusammengefaßt und als ein Wort umgespeichert oder eingeschrieben. Oberhalb einer bestimmten Mindestanzahl von Worten wird die für den Umspeicher- bzw. Einschreibevorgang erforderliche Anzahl von CPZ-Zyklen erheblich vermindert.

FIG.3B

# VERFAHREN ZUR LAUFZEITOPTIMIERUNG VON UMSPEICHER- UND AUFFÜLLVORGÄNGEN IM SPEICHER EINER ELEKTRONISCHEN DATENVERARBEITUNGSANLAGE

Die Erfindung betrifft ein Verfahren zur Optimierung der Laufzeit von Umspeicher- und Auffüllvorgängen im Speicher elektronischer Datenverarbeitungsanlagen, insbesondere solcher Datenverarbeitungsanlagen, die mit Mikroprozessoren bestückt sind.

Im Speicher elektronischer Datenverarbeitungsanlagen, die mit n-Bit Prozessoren versehen sind, stehen im allgemeinen n-Bit breite Speicherplätze zur Verfügung. Trotz der n-Bit breiten Speicherplätze ist es nicht erforderlich, daß alle Informationseinheiten, die im Speicher abgespeichert werden sollen, ebenfalls n-Bit breit sind. Unter einer Adresse im Speicher können beispielsweise zwei Informationseinheiten der Breite $\frac{n}{2}$ -Bit abgespeichert werden.

Im folgenden wird eine n-Bit breite Information Wort genannt, eine $\frac{n}{2}$ -Bit breite Information Byte. Mit den Begriffen Wort und Byte heißt das Obengesagte, daß unter einer Adresse entweder ein Wort oder zwei Byte abgespeichert sein können. Es ist jedoch auch nicht erforderlich, ein Wort unter ein und derselben Adresse abzulegen. Beispielsweise kann ein Wort zu einem Teil unter einer ersten und zum andern Teil unter einer auf diese erste Adresse folgenden zweiten Adresse abgelegt sein.

Beim Umspeichern von Informationen können nun mehrere Fälle auftreten:

1. Es soll byteweise umgespeichert werden,
2. es soll wortweise umgespeichert werden, und zwar solche Worte, die unter einer einzigen Adresse abgespeichert sind,
3. es sollen Worte umgespeichert werden, die unter zwei aufeinanderfolgenden Adressen abgespeichert sind.

Da die CPU beim Umspeichern aus dem Speicher immer ein vollständiges Wort herausholt, braucht sie zur Bearbeitung des ersten und des zweiten Falles jeweils gleich lang. Für das Einschreiben in den Speicher gilt dasselbe. Im dritten Fall muß jedoch auf zwei Adressen zugegriffen werden, um eine Informationseinheit zu erhalten. Dieser Vorgang erfordert mehr Zeit als ein Zugriff auf eine einzige Adresse.

Oft sind große Informationsmengen umzspeichern, beispielsweise mehrere tausend Worte, von denen jedes unter zwei Adressen abgespeichert ist. In einem solchen Fall addieren sich die durch das zweifache Zugreifen erforderlichen zusätzlichen Zeiten zu einer beträchtlichen Gesamtzeit. Während dieser Gesamtzeit steht die CPU für andere Aufgaben nicht zur Verfügung. Dasselbe gilt für den Fall, wenn ein und dasselbe Wort sehr oft in einen Speicherbereich eingeschrieben werden soll, und dabei jedesmal auf zwei Adressen zugegriffen werden muß.

Aufgabe der Erfindung ist es, ein Verfahren anzugeben, das die Umspeicher- oder Auffüllzeiten von Speicherbereichen verkürzt, ohne die logische Zusammengehörigkeit der Informationseinheiten zu zerstören. Diese Aufgabe wird gelöst durch ein Verfahren mit der Merkmalskombination des Hauptanspruches und des ersten Nebenanspruches. Die abhängigen Ansprüche enthalten Weiterbildungen des erfindungsgemäßen Verfahrens.

Das Verfahren gemäß der Erfindung hat den Vorteil, bei der Umspeicherung größerer Informationsmengen oder bei der Auffüllung größerer Speicherbereiche mit ein und demselben Inhalt das zweifache Zugreifen für jedes Wort dadurch zu vermeiden, daß die Teile zweier aufeinanderfolgender Worte zu einem Wort zusammengesetzt und als ein Wort umgespeichert oder eingeschrieben werden. Dieser Vorteil tritt jedoch unterhalb einer bestimmten Anzahl von Daten nicht merklich in Erscheinung, da die Entscheidung, ob das Verfahren anwendbar ist oder nicht, ebenfalls eine gewisse Zeit beansprucht.

Ein Ausführungsbeispiel der Erfindung wird im folgenden anhand der Figuren 1 bis 3 näher erläutert. Es zeigen:

Fig. 1    einen Ausschnitt aus einer Datenverarbeitungsanlage mit CPU und Speicher,

Fig. 2    einen Teilbereich aus dem Speicher einer Datenverarbeitungsanlage,

Fig. 3a    den Umspeichervorgang,

Fig. 3b    den Auffüllvorgang.

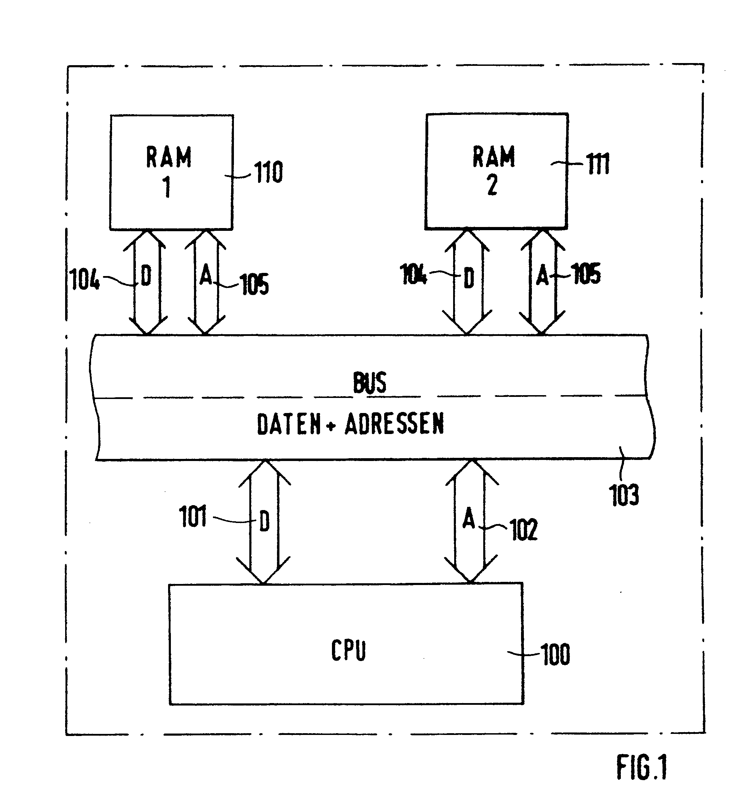

In Fig. 1 ist mit 100 eine zentrale Recheneinheit, auch Central Processor Unit (CPU) genannt, bezeichnet, die über zwei Verbindungsleitungen 101 und 102 mit einem Daten- und Adressbus 103 verbunden ist. Die Leitung 101 sei mit dem Datenbus von 103, die Verbindungsleitung 102 mit dem Adressbus von 103 verbunden. Mit 110 ist ein erster Speicherbereich bezeichnet, mit 111 ein zweiter Speicherbereich. Die Auftrennung des Gesamtspeichers in zwei Speicherbereiche ist willkürlich und dient hier im wesentlichen der Veranschaulichung der Erfindung. Beide Speicherbereiche stehen über Daten- und Adressleitungen 104, 105 mit dem Daten- und Adressbus 103 in Verbindung.

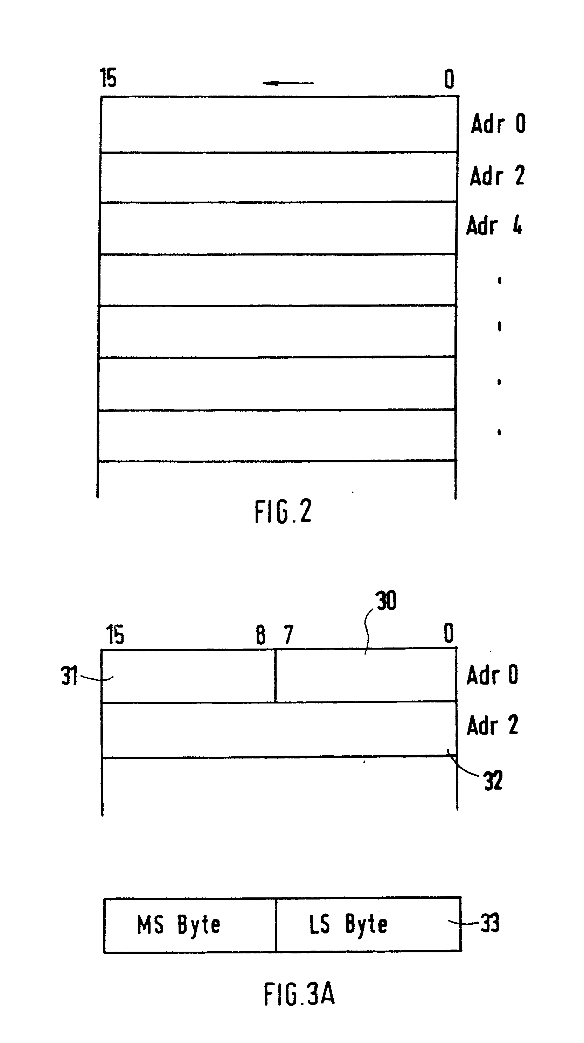

In diesem Ausführungsbeispiel sei angenommen, daß die Datenverarbeitungsanlage mit einem Prozessor aus der Familie 8086 bestückt sei. Dieser Prozessor ist ein 16-Bit Prozessor. Fig. 2 gibt schematisch den Aufbau der Speicher 110 und 111 wieder. Bei Prozessoren aus der Familie 8086 gibt es ausschließlich gerade Adressen. Die Speicherplätze sind 16-Bit breit, was durch die beiden Zahlen 0 und 15 am oberen Ende der Fig. 2 angedeutet ist. 16-Bit breite Informationseinheiten sollen im folgenden als Worte, 8-Bit breite Informationseinheiten als Byte bezeichnet werden. Beim Zugriff auf eine Adresse wird von der CPU stets ein vollständiges Wort ausgelesen, auch wenn lediglich ein Byte gebraucht wird. Soll z.B. ein Byte aus der Adresse 2 umgespeichert werden, wird der unter der Adresse 2 abgespeicherte 16-Bit Wert ausgelesen. Von der CPU werden dann intern die Bits 8 bis 15 ausmaskiert und lediglich die Bits 0 bis 7 benutzt. Soll ein Byte von einer ungeraden Adresse, beispielsweise der Adresse 5 umgespeichert werden, wird von der CPU das gesamte Wort von Adresse 4 ausgelesen, die Bits 0 bis 7 werden ausmarkiert und die Bits 8 bis 15 nach rechts verschoben, so daß sie auf den Plätzen der Bits 0 bis 7 stehen. Damit liegt der gewünschte 8-Bit Wert, ein Byte, in irgend einem internen Register vor. Beim Einschreiben in einen Speicher geschieht genau dasselbe. Eingeschrieben werden immer vollständige Worte. Die Maskierung und Verschiebung von Informationen geschieht innerhalb der CPU und tritt nach außen nicht in Erscheinung. Daraus folgt, daß die CPU genauso viele Arbeitszyklen braucht, ein Byte umzuspeichern, wie sie für ein Wort braucht.

Dies gilt nicht mehr, wenn ein Wort nicht unter einer Adresse, sondern unter zwei aufeinanderfolgenden Adressen abgespeichert ist. Fig. 3a soll dies näher erläutern. Mit 30 ist schematisch ein Teil aus dem Speicher 110 oder 111 bezeichnet. Mit 31 und 32 sind Teilbereiche unter der Adresse 0 bzw. der Adresse 2 bezeichnet, die ein umzuspeicherndes Wort enthalten. Dabei ist im mit 31 bezeichneten Bereich das niederwertige Byte (least significant byte = LS-Byte) enthalten, im Bereich 32 das höherwertige Byte (most significant byte = MS-Byte). Die CPU greift zunächst auf die Adresse 0 zu, holt von dort das gesamte Wort und verschiebt die Bits 8 bis 15 auf die Plätze 0 bis 7. Im nächsten Schritt greift die CPU auf die Adresse 2 zu, liest das dort stehende Wort aus und verschiebt die Bits 0 bis 7 auf die Plätze 8 bis 15. 33 bezeichnet ein internes Register, in dem das MS-Byte und das LS-Byte in der richtigen Reihenfolge abgespeichert sind. Der Einschreibvorgang in einen Speicher mit ungerader Adresse läuft nach demselben Muster ab. Man erkennt leicht, daß bei großen Mengen der für jedes Wort erforderliche zweifache Zugriff viele zusätzliche Arbeitszyklen der CPU erforderlich macht.

Der für jedes Wort erforderliche zweifache Zugriff läßt sich vermeiden, wenn man wie folgt vorgeht:

In einem ersten Schritt wird das LS-Byte aus dem Bereich 31 herausgeholt und entsprechend in einem zweiten Speicherbereich eingeschrieben. In dem darauf folgenden Schritt werden die beiden zu verschiedenen Worten gehörenden Bytes unter Adresse 2 wie ein Wort behandelt und als ein Wort umgespeichert. Dies wird solange fortgesetzt, bis man zum letzten Wort der umzuspeichernden Information gelangt ist. Von diesem Wort wird schließlich noch das MS-Byte einzeln umgespeichert und der Umspeicherprozess ist abgeschlossen.

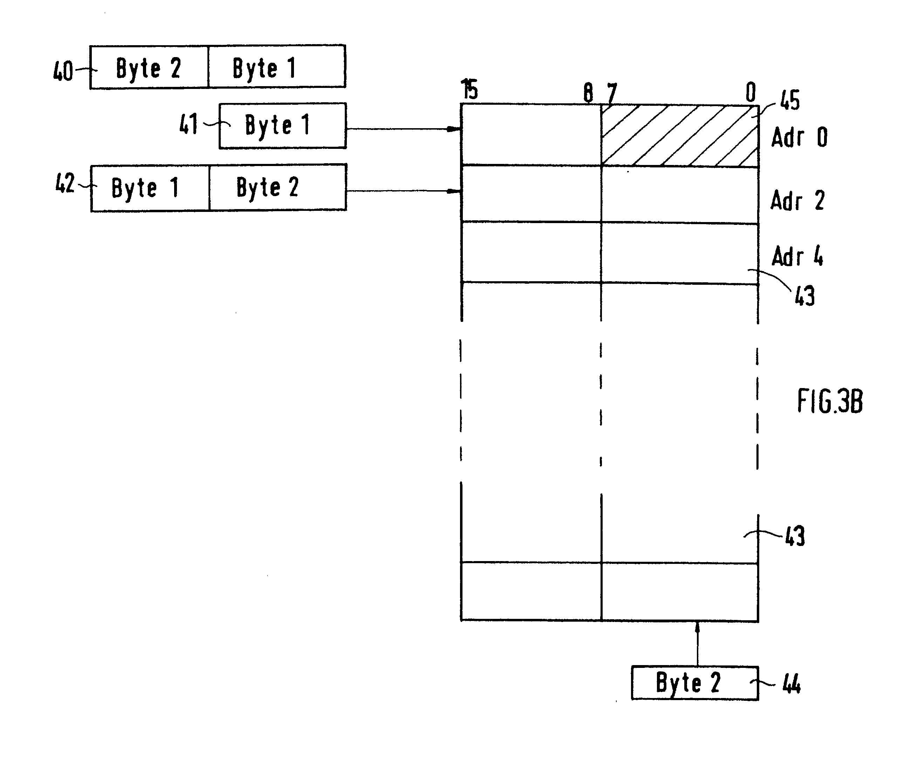

Anhand der Fig. 3b wird erläutert, wie ein Speicherbereich mit ein und demselben Wort aufgefüllt wird. Mit 40 ist ein Wort bezeichnet, das in einen mit 43 bezeichneten Speicherbereich eingeschrieben werden soll. Das Wort 40 besteht aus zwei Bytes, dem Byte 1 und dem Byte zwei. Der Speicherbereich 43 beginnt mit einer ungeraden Adresse, d.h., daß beispielsweise die Bits 0 bis 7 der Adresse 0, in der Figur mit 45 bezeichnet, bereits belegt sind. Mit 41 sind die Bits 0 bis 7 des Wortes 40 bezeichnet. Dieser Bereich, auch als Byte 1 bezeichnet, wird unter der Adresse 1 abgelegt. Adresse 1 ist identisch mit den Bits 8 bis 15 von Adresse 0. Daran anschließend werden Byte 1 und Byte 2 von Wort 40 miteinander vertauscht (siehe Bezugszeichen 42). Dieses Wort mit vertauschten Bytes wird nun in die Adresse 2, 4 usw. eingeschrieben, bis der Speicher mit Ausnahme des letzten Platzes aufgefüllt ist. Der letzte Platz wird dann mit dem Byte 2 gefüllt (Bezugszeichen 44).

Soll ein Speicherbereich nicht wortweise, sondern byteweise aufgefüllt werden, empfiehlt es sich, das Byte zu kopieren und anschließend den Speicherbereich wortweise aufzufüllen. Dadurch muß nicht für jedes Byte auf einer Adresse zugegriffen werden, sondern nur für jedes zweite.

Das exakte Timing für einen Prozessor der Familie 8086 sieht wie folgt aus:

1. Umspeichern eines 8- oder 16-Bitwertes erfordert 18 CPU-Zyklen.

2. Auffüllen mit einem 8- oder 16-Bitwert erfordert 11 CPU-Zyklen.

3. Jede Wiederholung eines der obengenannten Befehle, die mit Hilfe eines speziellen Wiederholungsbefehles durchgeführt wird, erfordert zwei zusätzliche CPU-Zyklen.

4. Alle Operationen mit einem 16-Bitwert auf einer ungeraden Adresse (Bite 8 bis 15 einer geraden Adresse) erfordern 4 zusätzliche CPU-Zyklen.

Beispiel für die Umspeicherung von 16 8-Bitwerten (Bytes).

a. Ohne Optimierung:

16 x (18 + 2) = 320 CPU-Zyklen.

Mit Optimierung:

b. Ursprungs- und Zieladresse gerade:

16/2 x (18 + 2) = 160 CPU-Zyklen.

c. Ursprungs- und Zieladressen ungerade:

1 x 18 + 14/2 x (18 + 2) + 1 x 18 = 176 CPU-Zyklen.

d. Ursprungsadresse gerade, Zieladresse ungerade oder Ursprungsadresse ungerade und Zieladresse gerade:

16/2 x (18 + 2 + 4) = 192 CPU-Zyklen.

Die Antwort auf die Frage, ob die Ursprungs- oder Zieladressen gerade oder ungerade sind, erfordert ebenfalls noch einige CPU-Zyklen. Daraus folgt, daß das Optimierungsverfahren erst ab einer bestimmten Mindestmenge von Daten sinnvoll einsetzbar ist. Für Prozessoren der Familie 8086 liegt diese Grenze bei 11.

## Patentansprüche

1. Verfahren zur Laufzeitoptimierung von Umspeichervorgängen in einer elektronischen Datenverarbeitungsanlage, bei dem wenigstens z n-Bit breite Worte von n-Bit breiten Ursprungsspeicherplätzen auf n-Bit breite Zielspeicherplätze kopiert werden, bei dem weiterhin die höherwertigen $\frac{n}{2}$-Bit eines jeden Wortes unter einer ersten Adresse, und die niederwertigen $\frac{n}{2}$-Bit eines jeden Wortes unter einer auf die erste Adresse folgenden zweiten Adresse in den ersten Speicherplätzen abgespeichert sind und auf die zweiten Speicherplätze kopiert werden, **dadurch gekennzeichnet,** daß $\frac{n}{2}$-Bit je zweier aufeinanderfolgender, unter einer Adresse abgespeicherter Worte zu einem einzigen Wort zusammengefaßt und vom Ursprungsspeicherplatz auf den Zielspeicherplatz kopiert werden.

2. Verfahren nach Anspruch 1, dadurch gekennzeichnet, daß die $\frac{n}{2}$ höherwertigen Bit des ersten der z Worte vom Ursprungsspeicherplatz auf den Zielspeicherplatz kopiert werden.

3. Verfahren nach Anspruch 1, dadurch gekennzeichnet, daß die $\frac{n}{2}$ niederwertigen Bit des letzten der z Worte vom Ursprungsspeicherplatz auf den Zielspeicherplatz kopiert werden.

4. Verfahren zur nach den Ansprüchen 1 bis 3, dadurch gekennzeichnet, daß die Zahl z der umzuspeichernden Worte ermittelt wird.

5. Verfahren nach Anspruch 4, dadurch gekennzeichnet, daß es nur angewendet wird, falls z eine vorgebbare Schranke überschreitet.

6. Verfahren zur Laufzeitoptimierung von Auffüllvorgängen in einer elektronischen Datenverarbeitungsanlage, bei dem ein n-Bit breites Wort wenigstens z-mal in n-Bit breite Speicherplätze eingeschrieben wird, und bei dem weiterhin im ersten Speicherplatz $\frac{n}{2}$-Bit bereits belegt sind, mit folgenden Verfahrensschritten:

a) Die niederwertigen $\frac{n}{2}$-Bit werden in die noch vorhandene Kapazität des ersten Speicherplatzes eingeschrieben,

b) vom einzuschreibenden Wort werden die niederwertigen $\frac{n}{2}$-Bit mit den höherwertigen $\frac{n}{2}$-Bit vertauscht und in die nachfolgenden Speicherplätze eingeschrieben,

c) die höherwertigen $\frac{n}{2}$-Bit des einzuschreibenden Wortes werden in den letzten Speicherplatz eingeschrieben.

FIG.1

15 ⟵ 0

Adr 0

Adr 2

Adr 4

.

.

.

.

FIG.2

15      8 7    30    0

31

Adr 0

Adr 2

32

| MS Byte | LS Byte | 33 |

FIG.3A

FIG.3B

Europäisches
Patentamt

**EUROPÄISCHER
RECHERCHENBERICHT**

Nummer der Anmeldung

**EP 91 10 0807**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | IBM TECHNICAL DISCLOSURE BULLETIN, Band 19, Nr. 1, Juni 1976, Seiten 67-70, New York, US; J.T. DVORAK et al.: "Hardware assist for microcode execution of storage-to-storage move instructions" * Das ganze Dokument * — — — | 1-6 | G 06 F 12/04 |
| Y | "Microprocessor and Peripheral Handbook", Band 1, 1988, Seiten 3-82 - 3-140, Santa Clara, Intel, US; "82258 advanced direct memory access coprocessor (ADMA)" * Seite 3-100, rechte Spalte, Zeile 13 - Seite 3-101, rechte Spalte, Zeile 7; Seite 3-108, linke Spalte, Zeile 35 - rechte Spalte, Zeile 14 * — — — — — | 1-6 | |

**RECHERCHIERTE SACHGEBIETE (Int. Cl.5)**

G 06 F 12
C 08 F 9

Der vorliegende Recherchenbericht wurde für alle Patentansprüche erstellt

| Recherchenort | Abschlußdatum der Recherche | Prüfer |
|---|---|---|
| Den Haag | 10 Juni 91 | NIELSEN O.P. |